# EUROPÄISCHE PATENTSCHRIFT

(11) **EP 2 374 343 B1**
(45) Veröffentlichungstag und Bekanntmachung des Hinweises auf die Patenterteilung: **02.10.2013**
(21) Anmeldenummer: 11160794.1
(22) Anmeldetag: 01.04.2011
(51) Int. Cl.: A01C 7/20, A01C 7/06

(54) **Einzelkornsäaggregat**
Single-grain seeder unit
Agrégat de semoir monograine

(30) Priorität: 09.04.2010 DE 102010014447
(43) Veröffentlichungstag der Anmeldung: 12.10.2011
(73) Patentinhaber: Horsch Maschinen GmbH, 92421 Schwandorf (DE)
(72) Erfinder: Horsch, Michael, 92421 Schwandorf (DE); Thomsen, Jens, 92542 Dieterskirchen (DE)
(74) Vertreter: Benninger, Johannes

(56) Entgegenhaltungen:
- EP-A2- 1 210 856
- FR-A1- 2 624 686
- US-A- 4 624 196
- US-A1- 2003 164 127

## Beschreibung

Die vorliegende Erfindung betrifft ein Einzelkornsäaggregat zur vereinzelten Ablage von Saatgut, das alleine oder gemeinsam mit weiteren gleichartigen Einzelkornsäaggregaten an einem Tragrahmen angeordnet ist, und an dessen Rahmen über eine gefederte Anlenkung eine Düngerapplikationsvorrichtung zur gemeinsam mit dem Saatgut und in definierbarem Abstand zu den Saatkörnern ausbringbarem Düngergranulat angeordnet ist.

Bekannte Sämaschinen zur vereinzelten Ablage von Saatgut weisen normalerweise eine Mehrzahl von parallel hinter einer Zugmaschine geführten Einzelkornsäaggregaten auf, die jeweils das Saatgut für jede Reihe in der gewünschten Weise und im gewünschten Kornabstand ausbringen. Die Aussaat von Reihenkulturen wie bspw. Mais, Zuckerrüben, Sonnenblumen, Soja usw. erfolgt üblicherweise mit Einzelkorndrillmaschinen in relativ großen Reihenabständen. In diesen Kulturen ist es von Vorteil, gleichzeitig mit der Saat auch Dünger zu applizieren. Die Düngerablage erfolgt i.d.R. in einem festen Abstand zu der Saatreihe mit Hilfe von zusätzlichen Scharsystemen. Die Scharssysteme können die unterschiedlichsten Formen aufweisen, bspw. als Scheiben- oder auch Zinkenschare ausgebildet sein. Des Weiteren können auch im Bereich der Saatreihen verschiedene Elemente eingesetzt werden. Dies können bspw. Schneidscheiben, Klutenräumelemente oder Lockerungselemente sein.

Üblicherweise werden Düngereinlegeelemente oder sonstige Elemente vor den Einzelschareinheiten am Rahmen angebracht. Für besondere Bodenbedingungen können diese Elemente auch gefedert am Rahmen befestigt sein. Die hierfür einsetzbaren Federungen gibt es in verschiedenster Ausführung, bspw. in Form von Druck-, Zug-, Dreh-, Blatt- oder Gummifederungen. Dabei sind die Schareinheiten üblicherweise an einem Gelenk angebracht und über die Federung zum Rahmen hin abgestützt.

Auch gibt es Lösungen, bei denen anstelle eines Gelenkes ein Federhebel - ausgeführt bspw. als Blatt- oder Spiralfeder - die Auslenkung beschreibt. Damit beschreiben alle diese Federmechanismen bei einer Ausfederung eine einer Kreisbahn ähnliche Bewegungsbahn.

Die US 69 55 131 B2 offenbart ein Säaggregat zur Ablage von Saatgut, das gemeinsam mit weiteren gleichartigen Säaggregaten an einem von einer Zugmaschine zu ziehenden Tragrahmen angeordnet ist, und an dessen Rahmen über eine gefederte Anlenkung eine Düngerapplikationsvorrichtung angeordnet ist. Die Bewegungsbahn der Düngerapplikationsvorrichtung gegen die Rückstellkraft einer Federeinrichtung ist gegenüber dem Rahmen des Säaggregats bogenförmig.

Derartige bogenförmige Bewegungsbahnen lassen auch die Aufhängung für die gezogene Scheibenschar der US 44 18 761 A sowie die Aufhängung einer Düngerapplikationsvorrichtung aus der US 47 62 075 A erkennen.

Diese Federungen und Aufhängungen haben allesamt den Nachteil, dass sie relativ viel Einbauraum benötigen. Je nach Dimensionierung der Federn sind die damit erzielbaren Rückstell- bzw. Auslösekräfte relativ gering. Durch die üblicherweise gelenkig ausgebildete Anbringung benötigt die Schareinheit viel Bauraum nach hinten, d.h. entgegen der Fahrtrichtung, sowie nach oben. Dabei kann es leicht zu Kollisionen mit dem Einzelkornscharkörper kommen. Aus diesem Grund werden diese Elemente meist entweder starr am Einzelkornscharkörper oder an einem anderen Einbauort befestigt, bspw. am Rahmen vor dem Einzelkornscharkörper. Die Anbringung an den Rahmen der Drillmaschinen stellt i.d.R. kein Problem dar, da meistens viel Baurum zur Verfügung steht. Jedoch ist bei dieser Platzierung der Düngerschare unabhängig von der Einzelkornschar die Ablagepräzision des Düngers im Verhältnis zu der Kornablage stark schwankend.

Weiter offenbart die FR 2 624 686 A1 ein Einzelkornsäaggregat, bei welchem eine Säschar linear und in vertikaler Richtung federnd an einem Rahmen gehalten ist. Bei dieser Federung kann bei großen Hindernissen ein Moment an der Säschar auftreten, welches zu einer Beschädigung der Säschar, der Federung oder des die Säschar tragenden Rahmens führt.

Ein Ziel der vorliegenden Erfindung besteht darin, eine möglichst präzise und gleichmäßige kombinierte Ablage von Saatgut und Dünger mittels eines Einzelkornsäaggregats zu gewährleisten, das mit einer federnd aufgehängten Düngerapplikationsvorrichtung kombiniert ist. Diese Gerätekombination soll einen möglichst konstant bleibenden Abstand zwischen dem applizierten Dünger und den vereinzelt abgelegten Saatkörnern gewährleisten und zudem besonders platzsparend ausgebildet sein. Zudem soll das Einzelkornsäaggregat derart ausgestaltet sein, dass eine Beschädigung einzelner Komponenten bei Auftreffen auf ein Hindernis zumindest weitgehend ausgeschlossen werden kann.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen. Zur Erreichung des genannten Ziels schlägt die vorliegende Erfindung ein Einzelkornsäaggregat zur vereinzelten Ablage von Saatgut vor, das alleine oder gemeinsam mit weiteren gleichartigen Einzelkornsäaggregaten an einem Tragrahmen angeordnet ist. Am Rahmen dieses Säaggregats ist über eine gefederte Anlenkung eine Düngerapplikationsvorrichtung zur gemeinsam mit dem Saatgut und in definierbarem Abstand zu den Saatkörnern ausbringbarem Düngergranulat angeordnet. Gemäß der Erfindung ist vorgesehen, dass eine Bewegungsbahn der Düngerapplikationsvorrichtung gegen die Rückstellkraft einer Federeinrichtung gegenüber dem Rahmen des Einzelkornsäaggregats annähernd geradlinig ist. Zudem ist diese annähernd lineare Bewegungsbahn der Düngerapplikationsvorrichtung entgegen einer Fahrtrichtung des gezogenen Einzelkornsäaggregats geneigt.

Die Erfindung sieht eine direkte Befestigung der Düngerschareinheit am Scharkörper des Säaggregats vor. Dadurch ist ein immer gleich bleibender Abstand zwischen Dünger und Saat gewährleistet. Die Düngerschareinheit kann beliebig ausgebildet sein, bspw. in Form einer Scheibe, eines Zinkens oder Schleppschares o. dgl. Die Anbringung eines Düngerschares oder anderen Elementes am Scharkörper selbst ist normalerweise räumlich extrem beengt. Deshalb wurden bisher die Düngerschare oder anderen Elemente normalerweise starr mit dem Scharkörper verbunden. Dadurch ist jedoch einerseits die Belastung auf die Düngerschare extrem hoch, andererseits wird durch die starr angebrachten Düngerschare der Scharkörper in steinigen Bodenverhältnissen deutlich mehr bewegt, wodurch die Ablagequalität ungünstig beeinflusst wird. Die vorliegende Erfindung liefert eine besonders Platz sparende Federung, die hohe Auslösekräfte aufweist und zudem sehr robust gebaut ist. Das Düngerschar bzw. die Düngerapplikationsvorrichtung ist nicht gelenkig am Einzelscharkörper angebracht, wie dies bisher üblich war, sondern in einer linearen oder annähernd linearen Kulisse geführt. Die Federbewegung erfolgt in einer linearen oder annähernd linearen Bewegungsrichtung schräg nach hinten oben, also nicht in einer kreis- oder bogenförmigen Bewegungsrichtung. Die Düngerapplikationsvorrichtung kann damit in eine optimale Richtung bezogen auf die Richtung des auslösenden Impulses (beispielsweise ein Stein, der überfahren werden soll) ausweichen.

Bei einer bevorzugten Ausführungsvariante des erfindungsgemäßen Einzelkornsäaggregats ist vorgesehen, dass die annähernd lineare Bewegungsbahn entlang einer Führungskulisse verläuft. Zudem kann die Bewegungsbahn vorzugsweise wenigstens einen unteren Anschlag aufweisen, so dass die Düngerapplikationsvorrichtung mittels der Federeinrichtung gegen den unteren Anschlag vorgespannt sein kann. Als solche Federeinrichtung kommt bspw. ein Zugfeder- oder ein Druckfedersystem in Frage. Die Federeinrichtung kann dabei bspw. eine mechanische Feder, eine hydraulische oder eine pneumatische Feder umfassen. Dadurch, dass das Düngerschar in einer linearen Kulisse gelagert und durch eine Feder gegen den unteren Anschlag vorgespannt ist, können sehr hohe Auslösekräfte realisiert werden und gleichzeitig besonders Platz sparend und eng gebaut werden, weil das Schar keine ausladende Schwingbewegung um einen Drehpunkt herum ausführen muss.

Gemäß einer weiteren Variante der vorliegenden Erfindung können an der Federeinrichtung am Rahmen des Einzelkornsäaggregats weitere Werkzeugeinrichtungen wie Schneidscheiben, Lockerungseinrichtung und/oder Klutenräumeinrichtungen o. dgl. angeordnet sein. Die Düngerapplikationsvorrichtung kann wahlweise als Düngerschar, insbesondere als Scheiben-, als Zinken- oder als Schleppschar ausgebildet sein.

Die erfindungsgemäße Gerätekombination aus Einzelkornsäaggregat und daran angebauter Düngerapplikationsvorrichtung weist zahlreiche Vorteile auf. So ist damit eine besonders Platz sparende Bauweise durch den linearen bzw. annähernd linearen Bewegungsweg und Aufbau der Düngerapplikationsvorrichtung ermöglicht. Die lineare Federungsrichtung entspricht exakt dem auslösenden Impuls. Zu Beginn der Auslenkung ist eine relativ hohe Auslösekraft notwendig, damit der gleich bleibende Abstand der Saatkornablage und der Düngerapplikation unter weitgehend allen Betriebsbedingungen aufrechterhalten wird.

Es bedarf an dieser Stelle keiner besonderen Erwähnung, dass bei den meisten in der Praxis gebräuchlichen mehrreihigen Sämaschinen eine größere Anzahl solcher Säaggregate mit daran angeordneten Düngerapplikationsvorrichtungen an einem gemeinsamen Tragrahmen angeordnet sind, so dass bei einer gezogenen Feldfahrt mit einer geeigneten landwirtschaftlichen Zugmaschine die Aussaat und Düngereinbringung in einer gewünschten Reihenanzahl durchgeführt werden kann. Die Aggregate unterscheiden sich dabei normalerweise nicht voneinander, sondern weisen jeweils einen identischen Aufbau auf. Zudem sind normalerweise auch die Reihenabstände und damit die Montageabstände der Aggregate voneinander gleich, wenn nicht aus Gründen der Spurgassengestaltung einzelne Abstände größer gewählt sind. Dies hat jedoch keinerlei Einfluss auf die Funktion und Ausgestaltung der erfindungsgemäßen Einzelkornsäaggregate.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt.
Fig. 1 zeigt eine schematische Perspektivansicht eines erfindungsgemäßen Einzelkornsäaggregats sowie dessen gelenkige Anordnung an einem Tragrahmen einer gezogenen landwirtschaftlichen Maschine.
Fig. 2 zeigt eine weitere Ansicht des Einzelkornsäaggregats gemäß Fig. 1, jedoch ohne die gelenkige Anbindung an den Tragrahmen.
Fig. 3 zeigt eine Seitenansicht des Aggregats gemäß Fig. 2.
Fig. 4 zeigt eine perspektivische Ansicht einer Düngerapplikationsvorrichtung, die mit einer linearen Führung am Einzelkornsäaggregat gelagert ist.
Fig. 5 zeigt eine Seitenansicht der Düngerapplikationsvorrichtung gemäß Fig. 4.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung oder das erfindungsgemäße Verfahren ausgestaltet sein können und stellen keine abschließende Begrenzung dar.

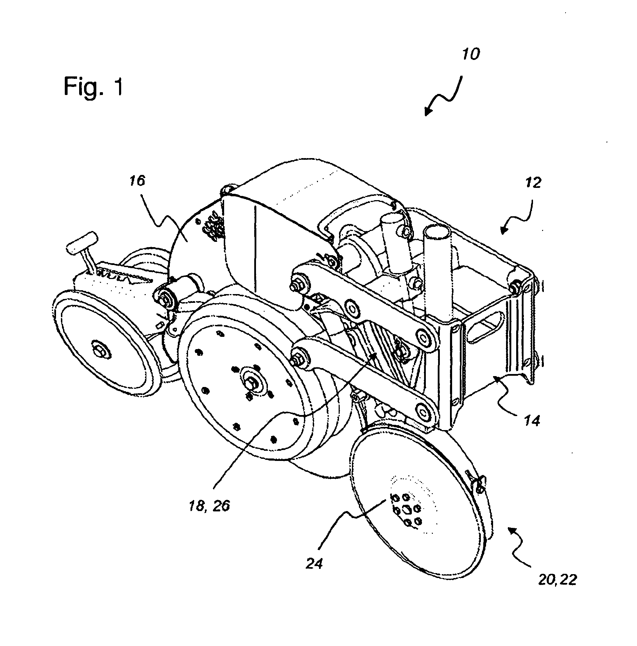

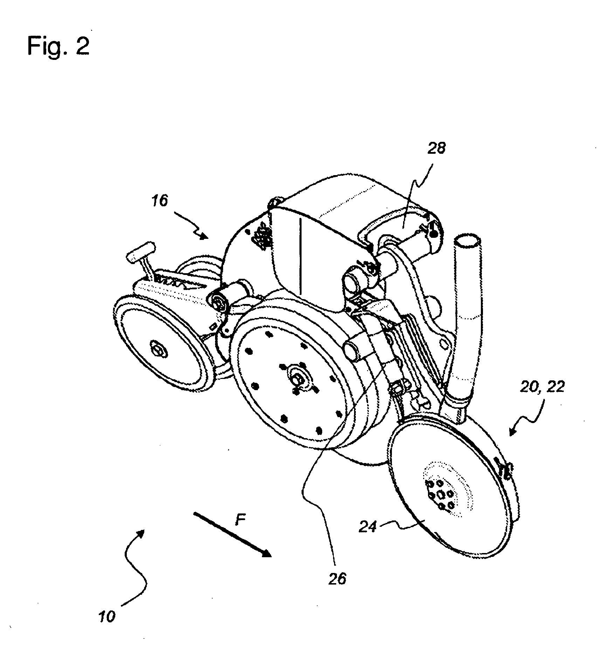

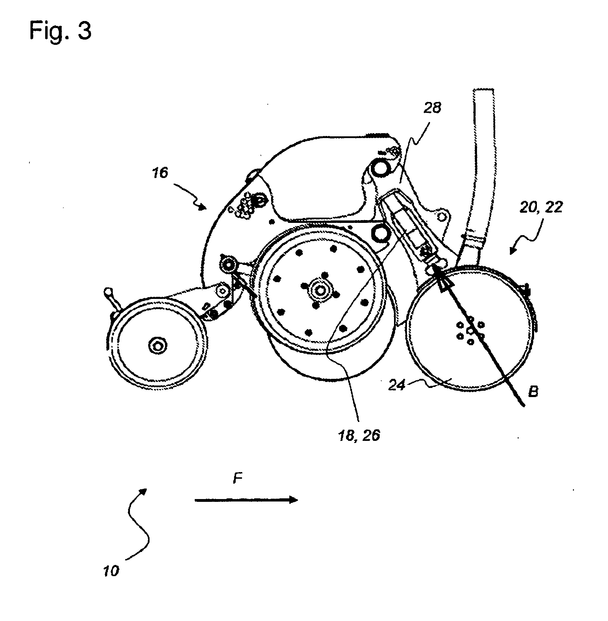

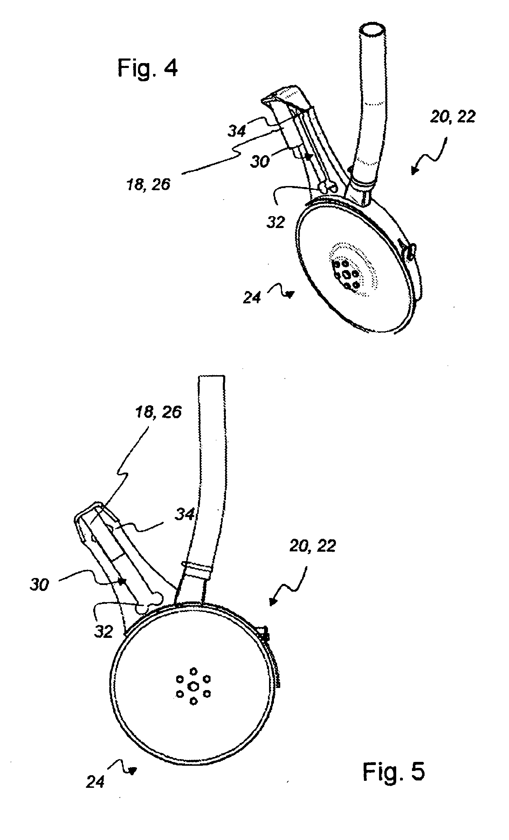

Die schematischen Darstellungen der Figuren 1 bis 5 zeigen anhand eines Ausführungsbeispiels den Aufbau und die Funktionsweise einer Gerätekombination aus einem Einzelkornsäaggregat und einer daran mit einer linearen Führung gelagerten Düngerapplikationsvorrichtung. So zeigt die Fig. 1 ein Einzelkornsäaggregat 10 zur vereinzelten Ablage von Saatgut, das alleine oder gemeinsam mit weiteren gleichartigen Einzelkornsäaggregaten (nicht dagestellt) über eine gefederte und/oder gedämpfte Parallelogrammaufhängung 12 an einem Tragrahmen (nicht dargestellt) angeordnet ist. Zur Verbindung mit dem hier nicht gezeigten Tragrahmen dient eine Anschlussplatte 14, die an einem Querträger des Tragrahmens in einer gewünschten Position verschraubt sein kann. Am gelenkig über die Parallelogrammaufhängung 12 nach oben und unten bewegbaren Rahmen 16 des Säaggregats 10 ist über eine gefederte Anlenkung 18 eine Düngerapplikationsvorrichtung 20 in Form einer Düngerschareinheit 22 mit einer Scharscheibe 24 zur gemeinsam mit dem Saatgut und in definierbarem Abstand zu den Saatkörnern ausbringbarem Düngergranulat angeordnet. Wie in Fig. 3 verdeutlicht, ist eine Bewegungsbahn B der Düngerapplikationsvorrichtung 20 gegen die Rückstellkraft einer Federeinrichtung 26 gegenüber dem Rahmen 16 des Einzelkornsäaggregats 10 annähernd geradlinig. Zudem ist diese annähernd lineare Bewegungsbahn B der Düngerapplikationsvorrichtung 20 entgegen einer Fahrtrichtung F des gezogenen Einzelkornsäaggregats 10 geneigt.

Wie anhand der Figuren 1 bis 3 verdeutlicht ist, sieht die erfindungsgemäße Ausführungsvariante eine direkte Befestigung der Düngerschareinheit 22 am Scharkörper 28 des Säaggregats 10 vor. Dadurch ist ein immer gleich bleibender Abstand zwischen Dünger und Saat gewährleistet. Die Düngerschareinheit 22 kann beliebig ausgebildet sein, bspw. in Form einer Scheibe 24, eines Zinkens oder Schleppschares o. dgl.

Weiterhin ist vorgesehen, dass die annähernd lineare Bewegungsbahn B entlang einer Führungskulisse 30 verläuft. Zudem weist die Bewegungsbahn B einen unteren Anschlag 32 sowie einen oberen Anschlag 34 auf, so dass die Düngerapplikationsvorrichtung 20 mittels der Federeinrichtung 26 gegen den unteren Anschlag 32 vorgespannt ist. Als solche Federeinrichtung 26 kommt bspw. ein Zugfeder- oder ein Druckfedersystem in Frage. Die Federeinrichtung 26 kann wahlweise eine mechanische Feder, eine hydraulische, eine pneumatische oder eine gummielementartige Feder umfassen. Dadurch, dass das Düngerschar 22 in der linearen Kulisse 30 gelagert und durch die Feder 26 gegen den unteren Anschlag 32 vorgespannt ist, können sehr hohe Auslösekräfte realisiert werden und gleichzeitig besonders Platz sparend und eng gebaut werden, weil das Schar 22 keine ausladende Schwingbewegung um einen Drehpunkt herum ausführen muss.

### Bezugszeichenliste:

- 10: Einzelkornsäaggregat
- 12: Parallelogrammaufhängung
- 14: Anschlussplatte
- 16: Rahmen
- 18: gefederte Anlenkung
- 20: Düngerapplikationsvorrichtung
- 22: Düngerschareinheit
- 24: Scharscheibe
- 26: Federeinrichtung
- 28: Scharkörper
- 30: Führungskulisse
- 32: unterer Anschlag
- 34: oberer Anschlag

- B: Bewegungsrichtung, Bewegungsbahn
- F: Fahrtrichtung

## Patentansprüche

1. Einzelkornsäaggregat (10) zur vereinzelten Ablage von Saatgut, das alleine oder gemeinsam mit weiteren gleichartigen Einzelkornsäaggregaten (10) an einem von einer Zugmaschine zu ziehenden Tragrahmen angeordnet ist, und an dessen Rahmen (16) über eine gefederte Anlenkung (18) eine Düngerapplikationsvorrichtung (20) für gemeinsam mit dem Saatgut und in definierbarem Abstand zu den Saatkörnern ausbringbares Düngergranulat angeordnet ist, wobei eine Bewegungsbahn (B) der Düngerapplikationsvorrichtung (20) gegen die Rückstellkraft einer Federeinrichtung (26) gegenüber dem Rahmen (16) des Einzelkornsäaggregats (10) annähernd geradlinig ist, **dadurch gekennzeichnet, dass** die annähernd lineare Bewegungsbahn (B) der Düngerapplikationsvorrichtung (20) entgegen einer Fahrtrichtung (F) geneigt ist.

2. Einzelkornsäaggregat nach Anspruch 1, bei dem die annähernd lineare Bewegungsbahn (B) entlang einer Führungskulisse (30) verläuft.

3. Einzelkornsäaggregat nach Anspruch 1 oder 2, bei dem die Bewegungsbahn (B) wenigstens einen unteren Anschlag (32) aufweist.

4. Einzelkornsäaggregat nach Anspruch 3, bei dem die Düngerapplikationsvorrichtung (20) mittels der Federeinrichtung (26) gegen den unteren Anschlag (32) vorgespannt ist.

5. Einzelkornsäaggregat nach Anspruch 3 oder 4, bei dem die Federeinrichtung (26) ein Zugfeder- oder ein Druckfedersystem umfasst.

6. Einzelkornsäaggregat nach einem der Ansprüche 3 bis 5, bei dem die Federeinrichtung (26) eine mechanische Feder, eine hydraulische, eine pneumatische oder eine gummielementartige Feder umfasst.

7. Einzelkornsäaggregat nach einem der Ansprüche 3 bis 6, bei dem an der Federeinrichtung (26) am Rahmen (16) des Einzelkornsäaggregats (10) weitere Werkzeugeinrichtungen wie Schneidscheiben, Lockerungseinrichtung und/oder Klutenräumeinrichtungen o. dgl. angeordnet sind.

8. Einzelkornsäaggregat nach einem der Ansprüche 1 bis 7, bei dem die Düngerapplikationsvorrichtung (20) als Düngerschar (22), insbesondere als Scheibenschar (24), als Zinken- oder als Schleppschar ausgebildet ist.

## Claims

1. Single-grain seeder unit (10) for single seed placement (10), said seeder unit (10) being arranged individually or together with other single-grain seeder units (10) of the same type in a carrier frame intended to be towed by a tractor, with the seeder unit (10) having a frame (16) that is coupled to a fertiliser applying device (20) by means of a spring-loaded linkage (18), said fertiliser applying device (20) being intended for dispersing fertiliser granules together with the seeds in such a manner that seeds and fertiliser granules are spaced at a defined distance from each other, wherein said fertiliser applying device (20) has a trajectory path (B) that is oriented in an approximately straight line against the return force of a spring device (26) in relation to the frame (16) of the single-grain seeder unit (10), **characterised in that** the approximately linear trajectory path (B) of the fertiliser applying device (20) is inclined opposite to a driving direction (F).

2. Single-grain seeder unit according to claim 1 wherein the approximately linear trajectory path (B) runs along a guide slot (30).

3. Single-grain seeder unit according to claim 1 or 2 wherein the trajectory path (B) comprises at least one lower end stop (32).

4. Single-grain seeder unit according to claim 3 wherein the fertiliser applying device (20) is preloaded against the lower end stop (32) by means of the spring device (26).

5. Single-grain seeder unit according to claim 3 or 4 wherein the spring device (26) comprises a tension spring system or a pressure spring system.

6. Single-grain seeder unit according to one of the claims 3 to 5 wherein the spring device (26) comprises a mechanical, hydraulic, pneumatic, or elastic element type spring.

7. Single-grain seeder unit according to one of the claims 3 to 6 wherein further tool equipment, such as cutting disks, soil loosening devices, and/or clod clearers or the like, is arranged at the spring device (26) on the frame (16) of the single-grain seeder unit (10).

8. Single-grain seeder unit according to one of the claims 1 to 7 wherein the fertiliser applying device (20) is designed as a fertiliser coulter (22), in particular as a disk coulter (24), a tine coulter, or a shoe-tight opener.

## Revendications

1. Agrégat de semoir monograine (10) pour appliquer les semences de façon individualisée, qui est disposé seul ou conjointement avec d'autres agrégats de semoir monograine (10) similaires sur un bâti de support à tirer par un engin de traction, et sur le bâti (16) duquel est disposé, via une articulation (18) montée sur ressort, un dispositif d'application d'engrais (20) pour un granulé d'engrais apte à être épandu conjointement avec les semences et à une distance définissable par rapport aux graines, une trajectoire de mouvement (B) dudit dispositif d'application d'engrais (20) contre la force de rappel d'un dispositif formant ressort (26) étant approximativement rectiligne par rapport audit bâti (16) de l'agrégat de semoir monograine (10), **caractérisé par le fait que** la trajectoire de mouvement (B) approximativement rectiligne du dispositif d'application d'engrais (20) est inclinée à l'encontre d'une direction de déplacement (F).

2. Agrégat de semoir monograine selon la revendication 1, dans lequel la trajectoire de mouvement (B) approximativement rectiligne s'étend suivant une coulisse de guidage (30).

3. Agrégat de semoir monograine selon la revendication 1 ou 2, dans lequel la trajectoire de mouvement (B) présente au moins une butée inférieure (32).

4. Agrégat de semoir monograine selon la revendication 3, dans lequel ledit dispositif d'application d'engrais (20) est précontraint contre ladite butée inférieure (32) au moyen du dispositif formant ressort (26).

5. Agrégat de semoir monograine selon la revendication 3 ou 4, dans lequel ledit dispositif formant ressort (26) comprend un système à ressort de traction ou à ressort de compression.

6. Agrégat de semoir monograine selon l'une quelconque des revendications 3 à 5, dans lequel ledit dispositif formant ressort (26) comprend un ressort mécanique, un ressort hydraulique, un ressort pneumatique ou un ressort de type élément en caoutchouc.

7. Agrégat de semoir monograine selon l'une quelconque des revendications 3 à 6, dans lequel d'autres dispositif d'outil, tels que disques de coupe, dispositif d'ameublissement et/ou des dispositifs à évacuer les mottes ou similaires sont disposés sur ledit dispositif formant ressort (26) sur le bâti (16) de l'agrégat de semoir monograine (10).

8. Agrégat de semoir monograine selon l'une quelconque des revendications 1 à 7, dans lequel ledit dispositif d'application d'engrais (20) est réalisé en tant que localisateur-enfouisseur (22), en particulier en tant que soc à disque (24), comme soc-fourche ou comme soc pour tracteur.
